# EUROPEAN PATENT APPLICATION

(11) **EP 3 992 694 A1**
(43) Date of publication of application: **04.05.2022**
(21) Application number: 20832466.5
(22) Date of filing: 26.06.2020
(51) Int. Cl.: G02C 7/02, C07C 265/10, C08G 18/38, G02B 1/04, G02B 3/00

(54) **METHOD FOR MANUFACTURING SPECTACLE LENS, SPECTACLE LENS, AND SPECTACLES**

(30) Priority: 28.06.2019 JP 2019120667
(71) Applicant: Hoya Lens Thailand Ltd., Pathumthani 12130 (TH)
(72) Inventor: IGARI Masahito, Tokyo 160-8347 (JP); NAGASAWA Takumi, Tokyo 160-8347 (JP); YAMASHITA Teruo, Tokyo 160-8347 (JP); WATANABE Tsuyoshi, Tokyo 160-8347 (JP)
(74) Representative: Gerauer, Marc Philippé
(86) International application number: PCT/JP2020/025363
(87) International publication number: WO 2020/262660

(57) **Abstract**

Provided is a method for producing a spectacle lens, the spectacle lens being a cured product obtained by curing a polymerizable composition containing 5-(isocyanatomethyl)bicyclo[2.2.1]hept-2-ene and one or more polythiol compounds, the method including: preparing the polymerizable composition by a preparation process including a first mixing step of mixing 5-(isocyanatomethyl)bicyclo[2.2.1]hept-2-ene and a polythiol compound with each other in the presence of a first catalyst that catalyzes a thiol-ene reaction, and a second mixing step of mixing a second catalyst that catalyzes a thiourethanization reaction with a mixture obtained in the first mixing step; and subjecting the polymerizable composition to a curing treatment.

## Description

### Technical Field

The present invention relates to a method for producing a spectacle lens, a spectacle lens, and spectacles.

### Background Art

5-(Isocyanatomethyl)bicyclo[2.2.1]hept-2-ene is a compound having the following structure in which an isocyanate group and a norbornene ring are linked by a methylene group.

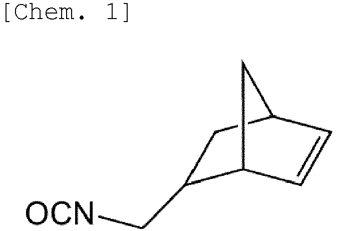

5-(Isocyanatomethyl)bicyclo[2.2.1]hept-2-ene is also referred to as bicyclo[2.2.1]hept-2-en-5-methyl isocyanate or 5-isocyanatomethyl-2-norbornene, and an example of a method for preparing the same is disclosed in Patent

### Literature 1.

### Citation List

### Patent Literature

Patent Literature 1: JP 2003-286241 A

### Summary of Invention

### Technical Problem

In the paragraph 0021 of Patent Literature 1, a spectacle lens is exemplified as an example of use of 5-(isocyanatomethyl)bicyclo[2.2.1]hept-2-ene. However, Patent Literature 1 does not specifically disclose that the spectacle lens is produced using 5-(isocyanatomethyl)bicyclo[2.2.1]hept-2-ene.

One aspect of the present invention provides a novel method for producing a spectacle lens using 5-(isocyanatomethyl)bicyclo[2.2.1]hept-2-ene.

### Solution to Problem

One aspect of the present invention relates to a method for producing a spectacle lens, the spectacle lens being a cured product obtained by curing a polymerizable composition containing 5-(isocyanatomethyl)bicyclo[2.2.1]hept-2-ene and one or more polythiol compounds, the method including: preparing the polymerizable composition by a preparation process including a first mixing step of mixing 5-(isocyanatomethyl)bicyclo[2.2.1]hept-2-ene and a polythiol compound with each other in the presence of a first catalyst that catalyzes a thiol-ene reaction, and a second mixing step of mixing a second catalyst that catalyzes a thiourethanization reaction with a mixture obtained in the first mixing step; and subjecting the polymerizable composition to a curing treatment.

The 5-(isocyanatomethyl)bicyclo[2.2.1]hept-2-ene has an isocyanate group, and further has a carbon-carbon double bond in a norbornene ring. Both the carbon-carbon double bond and the isocyanate group can react with a thiol group included in the polythiol compound. In the production method described above, first, the 5-(isocyanatomethyl)bicyclo[2.2.1]hept-2-ene and the polythiol compound are mixed with each other in the presence of the first catalyst that catalyzes the thiol-ene reaction between the thiol group and the carbon-carbon double bond. Therefore, it is considered that the thiol group and the carbon-carbon double bond can be preliminarily reacted with each other. It is considered that, after the preliminary reaction, curing of the polymerizable composition after being mixed with the second catalyst that catalyzes the thiourethanization reaction between the thiol group and the isocyanate group contributes to suppression of generation of striae. Furthermore, it is considered that this also preferably contributes to suppression of generation of white turbidity and/or bubbles. As a result, it is presumed that a spectacle lens having excellent optical quality can be provided.

### Advantageous Effects of Invention

According to one aspect of the present invention, a polythiourethane-based spectacle lens having excellent optical quality can be provided using 5-(isocyanatomethyl)bicyclo[2.2.1]hept-2-ene.

### Description of Embodiments

### [Method for producing spectacle lens]

In the method for producing a spectacle lens, a preparation process of a polymerizable composition includes a first mixing step and a second mixing step. Hereinafter, the method for producing a spectacle lens will be described in more detail.

### <Preparation process of polymerizable composition>

In the present invention and the present specification, the "polythiol compound" refers to a compound having two or more thiol groups per molecule. In addition, the "poly(thi)ol compound" refers to one or both of a polythiol compound and a polyol compound. The "polyol compound" refers to a compound having two or more hydroxy groups per molecule. Some compounds that can be used as components of a polymerizable composition such as a polythiol compound have two or more isomers, and in these compounds, a mixture of two or more isomers may be used, or one of two or more isomers may be used alone.

A spectacle lens obtained by the method for producing a spectacle lens is a cured product obtained by curing a polymerizable composition containing 5-(isocyanatomethyl)bicyclo[2.2.1]hept-2-ene and one or more polythiol compounds.

### (First mixing step)

In the first mixing step, 5-(isocyanatomethyl)bicyclo[2.2.1]hept-2-ene and a polythiol compound are mixed with each other in the presence of a first catalyst that catalyzes a thiol-ene reaction.

The 5-(isocyanatomethyl)bicyclo[2.2.1]hept-2-ene is a compound having a structure shown above.

The polythiol compound mixed with the 5-(isocyanatomethyl)bicyclo[2.2.1]hept-2-ene in the first mixing step can be one or two or more polythiol compounds. The polythiol compound may be an aliphatic compound or an aromatic compound. In addition, in a case where the polythiol compound is a compound having a cyclic structure, the cyclic structure can be a monocyclic ring or an aliphatic heterocyclic ring, the monocyclic ring can be a carbon ring, and the heterocyclic ring can have, as atoms constituting the cyclic structure, one or more heteroatoms such as an oxygen atom, a nitrogen atom, and a sulfur atom together with a carbon atom. The number of thiol groups included in the polythiol compound is two or more, and preferably two to four per molecule. In addition, the number of thiol groups included in the polythiol compound is preferably three or more per molecule.

Examples of the polythiol compound include aliphatic polythiol compounds such as methanedithiol, 1,2-ethanedithiol, 1,1-propanedithiol, 1,2-propanedithiol, 1,3-propanedithiol, 2,2-propanedithiol, 1,6-hexanedithiol, 1,2,3-propanetrithiol, tetrakis(mercaptomethyl)methane, 1,1-cyclohexanedithiol, 1,2-cyclohexanedithiol, 2,2-dimethylpropane-1,3-dithiol, 3,4-dimethoxybutane-1,2-dithiol, 2-methylcyclohexane-2,3-dithiol, 1,1-bis(mercaptomethyl)cyclohexane, thiomalic acid bis(2-mercaptoethyl ester), 2,3-dimercaptosuccinic acid (2-mercaptoethyl ester), 2,3-dimercapto-1-propanol (2-mercaptoacetate), 2,3-dimercapto-1-propanol (3-mercaptoacetate), diethylene glycol bis(2-mercaptoacetate), diethylene glycol bis(3-mercaptopropionate), 1,2-dimercaptopropyl methyl ether, 2,3-dimercaptopropyl methyl ether, 2,2-bis(mercaptomethyl)-1,3-propanedithiol, bis(2-mercaptoethyl) ether, ethylene glycol bis(2-mercaptoacetate), ethylene glycol bis(3-mercaptopropionate), trimethylolpropane tris(2-mercaptoacetate), trimethylolpropane tris(3-mercaptopropionate), pentaerythritol tetrakis(2-mercaptoacetate), pentaerythritol tetrakis(3-mercaptopropionate), and 1,2-bis(2-mercaptoethylthio)-3-mercaptopropane; aromatic polythiol compounds such as 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,3-bis(mercaptoethyl)benzene, 1,4-bis(mercaptoethyl)benzene, 1,2-bis(mercaptomethoxy)benzene, 1,3-bis(mercaptomethoxy)benzene, 1,4-bis(mercaptomethoxy)benzene, 1,2-bis(mercaptoethoxy)benzene, 1,3-bis(mercaptoethoxy)benzene, 1,4-bis(mercaptoethoxy)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 1,2,3-tris(mercaptomethoxy)benzene, 1,2,4-tris(mercaptomethoxy)benzene, 1,3,5-tris(mercaptomethoxy)benzene, 1,2,3-tris(mercaptoethoxy)benzene, 1,2,4-tris(mercaptoethoxy)benzene, 1,3,5-tris(mercaptoethoxy)benzene, 1,2,3,4-tetramercaptobenzene, 1,2,3,5-tetramercaptobenzene, 1,2,4,5-tetramercaptobenzene, 1,2,3,4-tetrakis(mercaptomethyl)benzene, 1,2,3,5-tetrakis(mercaptomethyl)benzene, 1,2,4,5-tetrakis(mercaptomethyl)benzene, 1,2,3,4-tetrakis(mercaptoethyl)benzene, 1,2,3,5-tetrakis(mercaptoethyl)benzene, 1,2,4,5-tetrakis(mercaptoethyl)benzene, 1,2,3,4-tetrakis(mercaptoethyl)benzene, 1,2,3,5-tetrakis(mercaptomethoxy)benzene, 1,2,4,5-tetrakis(mercaptomethoxy)benzene, 1,2,3,4-tetrakis(mercaptoethoxy)benzene, 1,2,3,5-tetrakis(mercaptoethoxy)benzene, 1,2,4,5-tetrakis(mercaptoethoxy)benzene, 2,2'-dimercaptobiphenyl, 4,4'-dimercaptobiphenyl, 4,4'-dimercaptobibenzyl, 2,5-toluenedithiol, 3,4-toluenedithiol, 1,4-naphthalenedithiol, 1,5-naphthalenedithiol, 2,6-naphthalenedithiol, 2,7-naphthalenedithiol, 2,4-dimethylbenzene-1,3-dithiol, 4,5-dimethylbenzene-1,3-dithiol, 9,10-anthracene dimethanethiol, 1,3-di(p-methoxyphenyl)propane-2,2-dithiol, 1,3-diphenylpropane-2,2-dithiol, phenylmethane-1,1-dithiol, and 2,4-di(p-mercaptophenyl)pentane; halogen-substituted aromatic polythiol compounds such as a chlorine substitution product and a bromine substitution product such as 2,5-dichlorobenzene-1,3-dithiol, 1,3-di(p-chlorophenyl)propane-2,2-dithiol, 3,4,5-tribromo-1,2-dimercaptobenzene, and 2,3,4,6-tetrachloro-1,5-bis(mercaptomethyl)benzene; aromatic polythiol compounds containing a sulfur atom in addition to a mercapto group such as 1,2-bis(mercaptomethylthio)benzene, 1,3-bis(mercaptomethylthio)benzene, 1,4-bis(mercaptomethylthio)benzene, 1,2-bis(mercaptoethylthio)benzene, 1,3-bis(mercaptoethylthio)benzene, 1,4-bis(mercaptoethylthio)benzene, 1,2,3-tris(mercaptomethylthio)benzene, 1,2,4-tris(mercaptomethylthio)benzene, 1,3,5-tris(mercaptomethylthio)benzene, 1,2,3-tris(mercaptoethylthio)benzene, 1,2,4-tris(mercaptoethylthio)benzene, 1,3,5-tris(mercaptoethylthio)benzene, 1,2,3,4-tetrakis(mercaptomethylthio)benzene, 1,2,3,5-tetrakis(mercaptomethylthio)benzene, 1,2,4,5-tetrakis(mercaptomethylthio)benzene, 1,2,3,4-tetrakis(mercaptoethylthio)benzene, 1,2,3,5-tetrakis(mercaptoethylthio)benzene, 1,2,4,5-tetrakis(mercaptoethylthio)benzene, and nuclear alkylated product thereof; aliphatic polythiol compounds containing a sulfur atom in addition to a thiol group such as bis(mercaptomethyl)sulfide, bis(mercaptoethyl)sulfide, bis(mercaptopropyl)sulfide, bis(mercaptomethylthio)methane, bis(2-mercaptoethylthio)methane, bis(3-mercaptopropylthio)methane, 1,2-bis(mercaptomethylthio)ethane, 1,2-bis(2-mercaptoethylthio)ethane, 1,2-bis(3-mercaptopropylthio)ethane, 1,3-bis(mercaptomethylthio)propane, 1,3-bis(2-mercaptoethylthio)propane, 1,3-bis(3-mercaptopropylthio)propane, 1,2-bis(2-mercaptoethylthio)-3-mercaptopropane, 2-mercaptoethylthio-1,3-propanedithiol, 1,2,3-tris(mercaptomethylthio)propane, 1,2,3-tris(2-mercaptoethylthio)propane, 1,2,3-tris(3-mercaptopropylthio)propane, tetrakis(mercaptomethylthiomethyl)methane, tetrakis(2-mercaptoethylthiomethyl)methane, tetrakis(3-mercaptopropylthiomethyl)methane, bis(2,3-dimercaptopropyl)sulfide, 2,5-dimercapto-1,4-dithiane, bis(mercaptomethyl)disulfide, bis(mercaptoethyl)disulfide, bis(mercaptopropyl)disulfide, and esters of these thioglycolic acid and mercaptopropionic acid, hydroxymethyl sulfide bis(2-mercaptoacetate), hydroxymethyl sulfide bis(3-mercaptopropionate), hydroxyethyl sulfide bis(2-mercaptoacetate), hydroxyethyl sulfide bis(3-mercaptopropionate), hydroxypropyl sulfide bis(2-mercaptoacetate), hydroxypropyl sulfide bis(3-mercaptopropionate), hydroxymethyl disulfide bis(2-mercaptoacetate), hydroxymethyl disulfide bis(3-mercaptopropionate), hydroxyethyl disulfide bis(2-mercaptoacetate), hydroxyethyl disulfide bis(3-mercaptopropionate), hydroxypropyl disulfide bis(2-mercaptoacetate), hydroxypropyl disulfide bis(3-mercaptopropionate), 2-mercaptoethyl ether bis(2-mercaptoacetate), 2-mercaptoethyl ether bis(3-mercaptopropionate), 1,4-dithiane-2,5-diol bis(2-mercaptoacetate), 1,4-dithiane-2,5-diol bis(3-mercaptopropionate), thioglycolic acid (2-mercaptoethyl ester), thiodipropionic acid bis(2-mercaptoethyl ester), 4,4'-thiodibutyric acid bis(2-mercaptoethyl ester), dithiodiglycolic acid bis(2-mercaptoethyl ester), dithiodipropionic acid bis(2-mercaptoethyl ester), 4,4'-dithiodibutyric acid bis(2-mercaptoethyl ester), thiodiglycolic acid bis(2,3-dimercaptopropyl ester), thiodipropionic acid bis(2,3-dimercaptopropyl ester), dithiodiglycolic acid bis(2,3-dimercaptopropyl ester), dithiodipropionic acid bis(2,3-dimercaptopropyl ester), 4-mercaptomethyl-1,8-dimercapto-3,6-dithiaoctane (also referred to as 4-mercaptomethyl-3,6-dithiaoctan-1,8-dithiol), bis(1,3-dimercapto-2-propyl) sulfide, bis(mercaptomethyl)-3,6,9-trithiaundecane-1,11-dithiol (one of the isomers selected from the group consisting of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol, or a mixture of two or three of these isomers); and heterocyclic compounds containing a sulfur atom in addition to a mercapto group such as 3,4-thiophenedithiol, tetrahydrothiophene-2,5-dimercaptomethyl, 2,5-dimercapto-1,3,4-thiadiazole, 2,5-dimercapto-1,4-dithiane, and 2,5-dimercaptomethyl-1,4-dithiane.

The first catalyst is a catalyst that catalyzes a thiol-ene reaction. Examples of the first catalyst can include azobis compounds such as 2,2'-azobisisobutyronitrile, 2,2'-azobis(2-methylbutyronitrile), 2,2'-azobis-2,4-dimethylvaleronitrile, dimethyl-2,2'-azobisisoobtylate, 1,1'-azobis(cyclohexane-1-carbonitrile), 1,1'-azobis(1-acetoxy-1-phenylethane), and 2,2'-azobis(4-methoxy-2,4-dimethylvaleronitrile); and peroxide compounds such as benzoyl peroxide, acetyl peroxide, tert-butyl peroxide, propionyl peroxide, lauroyl peroxide, tert-butyl peracetate, tert-butyl perbenzoate, tert-butyl hydroperoxide, tert-butyl peroxypivalate, 1,1-bis(t-butylperoxy)-3,3,5-trimethylcyclohexane, t-butylperoxy-2-ethylhexanoate, t-amylperoxy-2-ethylhexanoate, t-amylperisononanoate, t-amylperoxyacetate, and t-amylperoxybenzoate. In the first mixing step, preferably, the mixture including the 5-(isocyanatomethyl)bicyclo[2.2.1]hept-2-ene, the polythiol compound, and the first catalyst can be heated. The heating is preferably performed at a heating temperature of 40 to 100°C for 0.5 to 2.0 hours. The heating temperature refers to a temperature of the mixture in a container in which mixing is performed. It is considered that the first mixing step is performed, and preferably, a first mixing step including heating is performed, such that the thiol group of the polythiol compound and the carbon-carbon double bond included in the norbornene ring of the 5-(isocyanatomethyl)bicyclo[2.2.1]hept-2-ene can be preliminarily reacted with each other before mixing a second catalyst that catalyzes a thiourethanization reaction. It is presumed that this contributes to suppression of generation of striae that causes deterioration of optical quality, and more preferably to suppression of generation of white turbidity and/or bubbles in the spectacle lens (cured product) obtained by curing the polymerizable composition. The first mixing step is preferably performed in the absence of the second catalyst.

A mixing ratio in the first mixing step is preferably determined so that the number of moles of the thiol group of the polythiol compound mixed in the first mixing step is equal to or more than the number of moles of the carbon-carbon double bond included in the norbornene ring of the 5-(isocyanatomethyl)bicyclo[2.2.1]hept-2-ene mixed in the first mixing step, and the total amount of the carbon-carbon double bond included in the norbornene ring is reacted.

### (Second mixing step)

In the second mixing step, a second catalyst that catalyzes a thiourethanization reaction is mixed with the mixture obtained in the first mixing step.

Examples of the second catalyst can include organotin compounds such as dibutyltin diacetate, dibutyltin dilaurate, dibutyltin dichloride, dimethyltin dichloride, monomethyltin trichloride, trimethyltin chloride, tributyltin chloride, tributyltin fluoride, and dimethyltin dibromide. The second catalyst can catalyze the thiourethanization reaction between the thiol group of the polythiol compound and the isocyanate group of the 5-(isocyanatomethyl)bicyclo[2.2.1]hept-2-ene. In addition, the second catalyst can catalyze the thiourethanization reaction between the thiol group of the polythiol compound and an iso(thio)cyanate group of an iso(thio)cyanate compound described below. Furthermore, the catalyst that catalyzes the thiourethanization reaction can also be usually a catalyst that catalyzes a urethanization reaction between a hydroxy group of a polyol compound described below and 5-(isocyanatomethyl)bicyclo[2.2.1]hept-2-ene or an iso(thio)cyanate group of an iso(thio)cyanate compound described below. In the second mixing step, 5-(isocyanatomethyl)bicyclo[2.2.1]hept-2-ene and a first catalyst may be additionally added or may be not additionally added, and are preferably not additionally added.

In one aspect, in the second mixing step, a poly(thi)ol compound can be mixed with the mixture obtained in the first mixing step in the presence of the second catalyst. Examples of the poly(thi)ol compound mixed here can include one or more polythiol compounds that are the same as or different from the polythiol compound mixed in the first mixing step and/or one or more polyol compounds.

A thiourethane bond is formed by a thiourethanization reaction between an iso(thio)cyanate group of 5-(isocyanatomethyl)bicyclo[2.2.1]hept-2-ene or an iso(thio)cyanate group described below and a thiol group of a polythiol compound. The thiourethane bond is a bond represented by the following Formula A, and X represents an oxygen atom or a sulfur atom. The following bond in which Z is an oxygen atom is formed by reacting the thiol group with the isocyanate group, and the following bond in which Z is a sulfur atom is formed by reacting the thiol group with the isothiocyanate group. In Formula A, * indicates the position where the thiourethane bond is bonded to another adjacent structure.

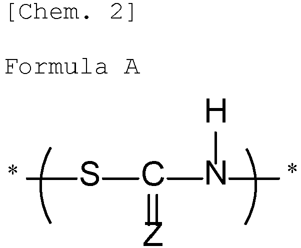

The spectacle lens obtained by curing a polymerizable composition containing 5-(isocyanatomethyl)bicyclo[2.2.1]hept-2-ene and one or more polythiol compounds can be a polythiourethane-based spectacle lens having a plurality of thiourethane bonds. On the other hand, the polyol compound can form a urethane bond by a urethanization reaction with an isocyanate group of 5-(isocyanatomethyl)bicyclo[2.2.1]hept-2-ene. The urethane bond is a bond having an oxygen atom (O) at the position of the sulfur atom (S) in Formula A. A polythiourethane-urethane-based spectacle lens can be obtained by using both a polythiol compound and a polyol compound.

Examples of the polyol compound can include ethylene glycol, 1,3-propanediol, 1,4-butanediol, 1,5-pentanediol, 1,6-hexanediol, diethylene glycol, propylene glycol, dipropylene glycol, triethylene glycol, butylene glycol, glycerin, trimethylolethane, trimethylolpropane, pentaerythritol, sorbitol, erythritol, xylitol, mannitol, polycaprolactone diol, polyethylene glycol, bisphenol A, bisphenol F, bisphenol A-bis(2-hydroxyethyl ether), tetrabromobisphenol A, tetrabromophenol A-bis(2-hydroxyethyl ether), and pyrogallol.

In addition, the polymerizable composition may or may not contain one or more iso(thio)cyanate compounds other than 5-(isocyanatomethyl)bicyclo[2.2.1]hept-2-ene. The iso(thio)cyanate compound other than 5-(isocyanatomethyl)bicyclo[2.2.1]hept-2-ene can be added and mixed in the first mixing step and/or the second mixing step, and is preferably added to and mixed with the mixture obtained in the first mixing step in the second mixing step. In the present invention and the present specification, the "iso(thio)cyanate compound" refers to a compound having one or more iso(thio)cyanate groups per molecule. The "iso(thio)cyanate" means one or both of isocyanate and isothiocyanate. The isocyanate may be referred to as isocyanate, and isothiocyanate may be referred to as isothiocyanate. The iso(thio)cyanate compound is a mono- or higher functional iso(thio)cyanate compound, and as for the functional number thereof, the iso(thio)cyanate compound is preferably a bi- or higher functional iso(thio)cyanate compound, more preferably a bifunctional to tetrafunctional iso(thio)cyanate compound, and still more preferably a bifunctional or trifunctional iso(thio)cyanate compound. The functional number of the iso(thio)cyanate compound is the number of iso(thio)cyanate groups included in one molecule.

Specific examples of the iso(thio)cyanate compound can include: an aliphatic isocyanate compound such as hexamethylene diisocyanate, 1,5-pentane diisocyanate, isophorone diisocyanate, bis(isocyanatomethyl) cyclohexane, dicyclohexylmethane diisocyanate, 2,5-bis(isocyanatomethyl)-bicyclo[2.2.1]heptane, 2,6-bis(isocyanatomethyl)-bicyclo[2.2.1]heptane, bis(4-isocyanatocyclohexyl) methane, 1,3-bis(isocyanatomethyl) cyclohexane, or 1,4-bis(isocyanatomethyl) cyclohexane; and an aromatic isocyanate compound such as xylylene diisocyanate, 1,3-diisocyanatobenzene, tolylene diisocyanate, or diphenylmethane diisocyanate. Furthermore, a halogen substitution product of the iso(thio)cyanate compound such as a chlorine substitution product thereof or a bromine substitution product thereof, an alkyl substitution product thereof, an alkoxy substitution product thereof, a prepolymer type modified product thereof with a nitro substitution product or a polyhydric alcohol, a carbodiimide modified product thereof, a urea modified product thereof, a biuret modified product thereof, a dimerization or trimerization reaction product thereof, and the like can be used. As the iso(thio)cyanate compound, one iso(thio)cyanate compound may be used alone, or two or more iso(thio)cyanate compounds may be mixed to be used.

The second mixing step can be performed, for example, in a container disposed in an environment of a room temperature atmosphere, by decompressing the inside of the container. The pressure in the container in which the second mixing step is performed is preferably 1,000 Pa or less, more preferably 800 Pa or less, and still more preferably 700 Pa or less, but is preferably 10 Pa or more, more preferably 50 Pa or more, and still more preferably 100 Pa or more, from the viewpoint of working efficiency. The mixing in the decompressed container is preferably performed for 10 to 60 minutes.

The mixing ratio in the second mixing step is preferably determined so that the number of moles of the thiol group of the polythiol compound mixed in the second mixing step is equal to or more than the number of moles of the iso(thio)cyanate group of the iso(thio)cyanate compound mixed in the second mixing step.

In the first mixing step and the second mixing step, the various components may be simultaneously mixed or may be mixed in an arbitrary mixing order. In addition, one or more kinds of known components such as additives and solvents generally used for producing a spectacle lens can be added in an arbitrary step. Examples of the additives can include various additives such as an ultraviolet absorber, an antioxidant, and a release agent. In addition, an organic phosphorus compound such as a phosphine derivative can also be used as an additive. The amount of the additive used can be appropriately set. As the solvent, it is possible to use one or more known solvents that can be used in the polymerizable composition in an arbitrary amount.

A content of each of various components based on the mass (100 mass%) of the polymerizable composition finally prepared through the first mixing step and the second mixing step is preferably as follows.

A content of the 5-(isocyanatomethyl)bicyclo[2.2.1]hept-2-ene is preferably 10 to 60 mass% with respect to the above standard. A content of the first catalyst is preferably 0.01 to 0.20 mass%. In a case where an iso(thio)cyanate compound other than 5-(isocyanatomethyl)bicyclo[2.2.1]hept-2-ene is used, a content thereof is preferably 10 to 50 mass%. A content of the polythiol compound is preferably 30 to 70 mass%. A content of the second catalyst is preferably 0.01 to 0.50 mass%. In a case where the polymerizable composition contains a solvent, the mass (100 mass%) of the polymerizable composition based on the content refers to the mass excluding the solvent. The "polymerizable composition" in the present invention and the present specification encompasses, for example, a composition in which a part of a reactive group included in a polymerizable component is included in a form after the reaction by performing the preliminary reaction described above.

The polymerizable composition obtained as described above is subjected to a curing treatment as it is or after optionally performing one or more processes such as filter filtration.

### <Curing treatment of polymerizable composition>

A spectacle lens that is a cured product of the polymerizable composition can be obtained by subjecting the polymerizable composition to a curing treatment. Cast polymerization is preferable as a method for producing a cured product (also referred to as a "plastic lens") having a spectacle lens shape. In the cast polymerization, a polymerizable composition is injected into a cavity of a molding die having two molds facing each other with a predetermined gap and a cavity formed by closing the gap, and a polymerizable compound contained in the polymerizable composition is subjected to a curing treatment in the cavity, such that a cured product can be obtained. The curing treatment can be a heat treatment or light irradiation, and is preferably a heat treatment. For details of a molding die usable in cast polymerization, for example, paragraphs 0012 to 0014 and Fig. 1 of JP 2009-262480 A can be referred to. Note that the publication describes a molding die in which the gap between the two molds is closed with a gasket as a sealing member, but a tape can also be used as the sealing member.

In one aspect, the cast polymerization can be performed as follows. The polymerizable composition is injected into a molding die cavity from an injection port formed on a side surface of the molding die. After the injection, by polymerizing (curing reaction) the polymerizable component contained in the polymerizable composition by heating, the polymerizable composition can be cured to obtain a cured product having an internal shape of the cavity transferred thereon. A polymerization condition is not particularly limited, and can be appropriately set depending on the composition of the polymerizable composition or the like. As an example, a molding die having a polymerizable composition injected into a cavity can be heated at a heating temperature of 20 to 150°C for about 1 to 72 hours, but the polymerization condition is not limited thereto. In the present invention and the present specification, the heating temperature related to cast polymerization refers to a temperature of an atmosphere in which a molding die is disposed. In addition, it is possible to raise the temperature at an arbitrary temperature rising rate during heating, and to lower the temperature (cooling) at an arbitrary temperature falling rate. After completion of the polymerization (curing reaction), the cured product inside the cavity is released from the molding die. The cured product can be released from the molding die by removing the upper and lower molds forming the cavity and a gasket or a tape in an arbitrary order as usually performed in cast polymerization. The cured product released from the molding die can be used as a spectacle lens after being subjected to a post-treatment, if necessary. In the present invention and the present specification, the "spectacle lens" encompasses a "spectacle lens substrate" in which one or more layers are optionally layered thereon. As an example, the cured product used as a spectacle lens substrate can be usually subjected to one or more post-processes such as annealing, a dyeing treatment, a grinding process such as a rounding process, a polishing process, or a process of forming a coating layer such as a primer coating layer for improving impact resistance or a hard coating layer for improving surface hardness after releasing. Furthermore, various functional layers such as an antireflection layer and a water-repellent layer can be formed on the spectacle lens substrate. A known technique can be applied to any of these processes.

### [Spectacle lens and spectacles]

One aspect of the present invention relates to a spectacle lens obtained by the method for producing a spectacle lens.

In addition, one aspect of the present invention relates to spectacles including the spectacle lenses.

Details of the spectacle lens are as described above. For example, a thickness of the spectacle lens can be about 0.5 to 30 mm, and a diameter of the spectacle lens can be about 50 to 100 mm. In addition, the spectacle lens can be various lenses such as a monofocal lens, a multifocal lens, and a progressive addition lens. A type of the spectacle lens is determined by a surface shape of both surfaces of the spectacle lens (spectacle lens substrate). In addition, a surface of the spectacle lens may be a convex surface, a concave surface, or a flat surface.

A known technique related to spectacles can be applied to a configuration of the spectacles, such as a frame.

Hereinafter, the present invention will be described in more detail with reference to Examples, but the present invention is not limited to aspects indicated by Examples. The operations and evaluations described below were performed in an environment of an atmosphere at room temperature (about 20 to 25°C) under atmospheric pressure, unless otherwise specified.

### [Example 1]

To a 300 ml eggplant type flask (hereinafter, described as a "container"), 45.0 g of 5-(isocyanatomethyl)bicyclo[2.2.1]hept-2-ene and 27.5 g of bis(mercaptomethyl)-3,6,9-trithiaundecane-1,11-dithiol as a polythiol compound were charged, 0.15 g of butoxyethyl acid phosphate (JP-506H, manufactured by JOHOKU CHEMICAL CO., LTD.) as a release agent and 0.01 g of 2,2'-azobis-2,4-dimethylvaleronitrile as a first catalyst were added, the mixture in the container was heated to a heating temperature of 60°C, and the mixture was continuously stirred for 2 hours, thereby performing a preliminary reaction.

Thereafter, the mixture in the container was cooled to room temperature, 27.5 g of bis(mercaptomethyl)-3,6,9-trithiaundecane-1,11-dithiol as a polythiol compound and 0.03 g of dimethyltin dichloride as a second catalyst were added, the pressure in the container was reduced to 130 Pa (1.0 Torr), and the mixture was stirred under reduced pressure for 30 minutes, thereby preparing a polymerizable composition.

The polymerizable composition was injected into a molding die for forming a lens through a polytetrafluoroethylene membrane filter having a pore diameter of 1.0 µm, and cast polymerization was performed at a temperature program from an initial temperature of 25°C to a final temperature of 125°C for 24 hours, thereby producing a plastic lens having a center thickness of 2 mm.

### [Comparative Example 1]

To a 300 ml eggplant type flask (container), 45.0 g of 5-(isocyanatomethyl)bicyclo[2.2.1]hept-2-ene and 55.0 g of bis(mercaptomethyl)-3,6,9-trithiaundecane-1,11-dithiol as a polythiol compound were charged, 0.15 g of butoxyethyl acid phosphate (JP-506H, manufactured by JOHOKU CHEMICAL CO., LTD.) as a release agent, 0.01 g of 2,2'-azobis-2,4-dimethylvaleronitrile as a catalyst, and 0.03 g of dimethyltin dichloride were added, the pressure in the container was reduced to 130 Pa (1.0 Torr), and the mixture was stirred under reduced pressure for 30 minutes, thereby preparing a polymerizable composition.

The polymerizable composition was injected into a molding die for forming a lens through a polytetrafluoroethylene membrane filter having a pore diameter of 1.0 µm, and cast polymerization was performed at a temperature program from an initial temperature of 25°C to a final temperature of 125°C for 24 hours, thereby producing a plastic lens having a center thickness of 2 mm.

### [Example 2]

To a 300 ml eggplant type flask (container), 41.0 g of 5-(isocyanatomethyl)bicyclo[2.2.1]hept-2-ene and 29.7 g of pentaerythritol tetrakis(2-mercaptoacetate) as a polythiol compound were charged, 0.15 g of butoxyethyl acid phosphate (JP-506H, manufactured by JOHOKU CHEMICAL CO., LTD.) as a release agent and 0.01 g of 2,2'-azobis-2,4-dimethylvaleronitrile as a first catalyst were added, the mixture in the container was heated to a heating temperature of 60°C, and the mixture was continuously stirred for 2 hours, thereby performing a preliminary reaction.

Thereafter, the mixture in the container was cooled to room temperature, 29.3 g of pentaerythritol tetrakis(2-mercaptoacetate) as a polythiol compound and 0.03 g of dimethyltin dichloride as a second catalyst were added, the pressure in the container was reduced to 130 Pa (1.0 Torr), and the mixture was stirred under reduced pressure for 30 minutes, thereby preparing a polymerizable composition.

The polymerizable composition was injected into a molding die for forming a lens through a polytetrafluoroethylene membrane filter having a pore diameter of 1.0 µm, and cast polymerization was performed at a temperature program from an initial temperature of 25°C to a final temperature of 125°C for 24 hours, thereby producing a plastic lens having a center thickness of 2 mm.

### [Comparative Example 2]

To a 300 ml eggplant type flask (container), 41.0 g of 5-(isocyanatomethyl)bicyclo[2.2.1]hept-2-ene and 59.0 g of pentaerythritol tetrakis(2-mercaptoacetate) as a polythiol compound were charged, 0.15 g of butoxyethyl acid phosphate (JP-506H, manufactured by JOHOKU CHEMICAL CO., LTD.) as a release agent, 0.01 g of 2,2'-azobis-2,4-dimethylvaleronitrile as a catalyst, and 0.03 g of dimethyltin dichloride were added, the pressure in the container was reduced to 130 Pa (1.0 Torr), and the mixture was stirred under reduced pressure for 20 minutes, thereby preparing a polymerizable composition.

The polymerizable composition was injected into a molding die for forming a lens through a polytetrafluoroethylene membrane filter having a pore diameter of 1.0 µm, and cast polymerization was performed at a temperature program from an initial temperature of 25°C to a final temperature of 125°C for 24 hours, thereby producing a plastic lens having a center thickness of 2 mm.

### [Example 3]

To a 300 ml eggplant type flask (container), 20.5 g of 5-(isocyanatomethyl)bicyclo[2.2.1]hept-2-ene and 12.6 g of bis(mercaptomethyl)-3,6,9-trithiaundecane-1,11-dithiol were charged, 0.15 g of butoxyethyl acid phosphate (JP-506H, manufactured by JOHOKU CHEMICAL CO., LTD.) as a release agent and 0.01 g of 2,2'-azobis-2,4-dimethylvaleronitrile as a first catalyst were added, the mixture in the container was heated to a heating temperature of 60°C, and the mixture was continuously stirred for 2 hours, thereby performing a preliminary reaction.

Thereafter, the mixture in the container was cooled to room temperature, 24.5 g of tolylene diisocyanate, 42.4 g of bis(mercaptomethyl)-3,6,9-trithiaundecane-1,11-dithiol, and 0.03 g of dimethyltin dichloride as a second catalyst were added, the pressure in the container was reduced to 130 Pa (1.0 Torr), and the mixture was stirred under reduced pressure for 30 minutes, thereby preparing a polymerizable composition.

The polymerizable composition was injected into a molding die for forming a lens through a polytetrafluoroethylene membrane filter having a pore diameter of 1.0 µm, and cast polymerization was performed at a temperature program from an initial temperature of 25°C to a final temperature of 125°C for 24 hours, thereby producing a plastic lens having a center thickness of 2 mm.

### [Comparative Example 3]

To a 300 ml eggplant type flask (container), 20.5 g of 5-(isocyanatomethyl)bicyclo[2.2.1]hept-2-ene, 24.5 g of tolylene diisocyanate, and 55.0 g of bis(mercaptomethyl)-3,6,9-trithiaundecane-1,11-dithiol were charged, 0.15 g of butoxyethyl acid phosphate (JP-506H, manufactured by JOHOKU CHEMICAL CO., LTD.) as a release agent, 0.01 g of 2,2'-azobis-2,4-dimethylvaleronitrile as a catalyst, and 0.03 g of dimethyltin dichloride were added, the pressure in the container was reduced to 130 Pa (1.0 Torr), and the mixture was stirred under reduced pressure for 30 minutes, thereby preparing a polymerizable composition.

The polymerizable composition was injected into a molding die for forming a lens through a polytetrafluoroethylene membrane filter having a pore diameter of 1.0 µm, and cast polymerization was performed at a temperature program from an initial temperature of 25°C to a final temperature of 125°C for 24 hours, thereby producing a plastic lens having a center thickness of 2 mm.

### [Example 4]

To a 300 ml eggplant type flask (container), 20.0 g of 5-(isocyanatomethyl)bicyclo[2.2.1]hept-2-ene and 12.3 g of bis(mercaptomethyl)-3,6,9-trithiaundecane-1,11-dithiol were charged, 0.15 g of butoxyethyl acid phosphate (JP-506H, manufactured by JOHOKU CHEMICAL CO., LTD.) as a release agent and 0.01 g of 2,2'-azobis-2,4-dimethylvaleronitrile as a first catalyst were added, the mixture in the container was heated to a heating temperature of 60°C, and the mixture was continuously stirred for 2 hours, thereby performing a preliminary reaction.

Thereafter, the mixture in the container was cooled to room temperature, 30.0 g of diphenylmethane diisocyanate, 37.7 g of bis(mercaptomethyl)-3,6,9-trithiaundecane-1,11-dithiol, and 0.03 g of dimethyltin dichloride as a second catalyst were added, the pressure in the container was reduced to 130 Pa (1.0 Torr), and the mixture was stirred under reduced pressure for 30 minutes, thereby preparing a polymerizable composition.

The polymerizable composition was injected into a molding die for forming a lens through a polytetrafluoroethylene membrane filter having a pore diameter of 1.0 µm, and cast polymerization was performed at a temperature program from an initial temperature of 25°C to a final temperature of 125°C for 24 hours, thereby producing a plastic lens having a center thickness of 2 mm.

### [Comparative Example 4]

To a 300 ml eggplant type flask (container), 20.0 g of 5-(isocyanatomethyl)bicyclo[2.2.1]hept-2-ene, 30.0 g of diphenylmethane diisocyanate, and 50.0 g of bis(mercaptomethyl)-3,6,9-trithiaundecane-1,11-dithiol were charged, 0.15 g of butoxyethyl acid phosphate (JP-506H, manufactured by JOHOKU CHEMICAL CO., LTD.) as a release agent, 0.01 g of 2,2'-azobis-2,4-dimethylvaleronitrile as a catalyst, and 0.03 g of dimethyltin dichloride were added, the pressure in the container was reduced to 130 Pa (1.0 Torr), and the mixture was stirred under reduced pressure for 30 minutes, thereby preparing a polymerizable composition.

The polymerizable composition was injected into a molding die for forming a lens through a polytetrafluoroethylene membrane filter having a pore diameter of 1.0 µm, and cast polymerization was performed at a temperature program from an initial temperature of 25°C to a final temperature of 125°C for 24 hours, thereby producing a plastic lens having a center thickness of 2 mm.

### [Example 5]

To a 300 ml eggplant type flask (container), 20.5 g of 5-(isocyanatomethyl)bicyclo[2.2.1]hept-2-ene and 12.6 g of bis(mercaptomethyl)-3,6,9-trithiaundecane-1,11-dithiol were charged, 0.15 g of butoxyethyl acid phosphate (JP-506H, manufactured by JOHOKU CHEMICAL CO., LTD.) as a release agent and 0.01 g of 2,2'-azobis-2,4-dimethylvaleronitrile as a first catalyst were added, the mixture in the container was heated to a heating temperature of 60°C, and the mixture was continuously stirred for 2 hours, thereby performing a preliminary reaction.

Thereafter, the mixture in the container was cooled to room temperature, 24.5 g of xylylene diisocyanate, 42.4 g of bis(mercaptomethyl)-3,6,9-trithiaundecane-1,11-dithiol, and 0.03 g of dimethyltin dichloride as a second catalyst were added, the pressure in the container was reduced to 130 Pa (1.0 Torr), and the mixture was stirred under reduced pressure for 30 minutes, thereby preparing a polymerizable composition.

The polymerizable composition was injected into a molding die for forming a lens through a polytetrafluoroethylene membrane filter having a pore diameter of 1.0 µm, and cast polymerization was performed at a temperature program from an initial temperature of 25°C to a final temperature of 125°C for 24 hours, thereby producing a plastic lens having a center thickness of 2 mm.

### [Comparative Example 5]

To a 300 ml eggplant type flask (container), 20.5 g of 5-(isocyanatomethyl)bicyclo[2.2.1]hept-2-ene, 24.5 g of xylylene diisocyanate, and 55.0 g of bis(mercaptomethyl)-3,6,9-trithiaundecane-1,11-dithiol were charged, 0.15 g of butoxyethyl acid phosphate (JP-506H, manufactured by JOHOKU CHEMICAL CO., LTD.) as a release agent, 0.01 g of 2,2'-azobis-2,4-dimethylvaleronitrile as a catalyst, and 0.03 g of dimethyltin dichloride were added, the pressure in the container was reduced to 130 Pa (1.0 Torr), and the mixture was stirred under reduced pressure for 30 minutes, thereby preparing a polymerizable composition.

The polymerizable composition was injected into a molding die for forming a lens through a polytetrafluoroethylene membrane filter having a pore diameter of 1.0 µm, and cast polymerization was performed at a temperature program from an initial temperature of 25°C to a final temperature of 125°C for 24 hours, thereby producing a plastic lens having a center thickness of 2 mm.

### [Example 6]

To a 300 ml eggplant type flask (container), 22.0 g of 5-(isocyanatomethyl)bicyclo[2.2.1]hept-2-ene and 13.5 g of bis(mercaptomethyl)-3,6,9-trithiaundecane-1,11-dithiol were charged, 0.15 g of butoxyethyl acid phosphate (JP-506H, manufactured by JOHOKU CHEMICAL CO., LTD.) as a release agent and 0.01 g of 2,2'-azobis-2,4-dimethylvaleronitrile as a first catalyst were added, the mixture in the container was heated to a heating temperature of 60°C, and the mixture was continuously stirred for 2 hours, thereby performing a preliminary reaction.

Thereafter, the mixture in the container was cooled to room temperature, 24.0 g of hexamethylene diisocyanate, 40.5 g of bis(mercaptomethyl)-3,6,9-trithiaundecane-1,11-dithiol, and 0.03 g of dimethyltin dichloride as a second catalyst were added, the pressure in the container was reduced to 130 Pa (1.0 Torr), and the mixture was stirred under reduced pressure for 30 minutes, thereby preparing a polymerizable composition.

The polymerizable composition was injected into a molding die for forming a lens through a polytetrafluoroethylene membrane filter having a pore diameter of 1.0 µm, and cast polymerization was performed at a temperature program from an initial temperature of 25°C to a final temperature of 125°C for 24 hours, thereby producing a plastic lens having a center thickness of 2 mm.

### [Comparative Example 6]

To a 300 ml eggplant type flask (container), 22.0 g of 5-(isocyanatomethyl)bicyclo[2.2.1]hept-2-ene, 24.0 g of hexamethylene diisocyanate, and 54.0 g of bis(mercaptomethyl)-3,6,9-trithiaundecane-1,11-dithiol were charged, 0.15 g of butoxyethyl acid phosphate (JP-506H, manufactured by JOHOKU CHEMICAL CO., LTD.) as a release agent, 0.01 g of 2,2'-azobis-2,4-dimethylvaleronitrile as a catalyst, and 0.03 g of dimethyltin dichloride were added, the pressure in the container was reduced to 130 Pa (1.0 Torr), and the mixture was stirred under reduced pressure for 30 minutes, thereby preparing a polymerizable composition.

The polymerizable composition was injected into a molding die for forming a lens through a polytetrafluoroethylene membrane filter having a pore diameter of 1.0 µm, and cast polymerization was performed at a temperature program from an initial temperature of 25°C to a final temperature of 125°C for 24 hours, thereby producing a plastic lens having a center thickness of 2 mm.

### [Evaluation method]

Each of the spectacle lenses of Examples and Comparative Examples was visually observed, and generation levels of striae, bubbles, and white turbidity was evaluated in three levels of A, B, and C. In the generation of each of the striae, bubbles, and white turbidity, "A" means that the generation was not observed or was slight (slighter than B), "B" means that the generation was observed (slighter than C), and "C" means that the generation was remarkably observed. The evaluation results are shown in Table1.

**[Table 1]**

| | White turbidity | Bubbles | Striae | | White turbidity | Bubbles | Striae |
|---|---|---|---|---|---|---|---|
| Example 1 | A | A | A | Comparative Example 1 | A | C | B |
| Example 2 | A | A | A | Comparative Example 2 | A | C | B |
| Example 3 | A | A | A | Comparative Example 3 | A | B | C |
| Example 4 | A | A | A | Comparative Example 4 | C | A | C |
| Example 5 | A | A | A | Comparative Example 5 | C | A | C |
| Example 6 | A | A | A | Comparative Example 6 | A | C | B |

It can be confirmed from the results shown in Table 1 that in the spectacle lenses of Examples 1 to 6, the evaluation result of striae is A, and the evaluation results of the white turbidity and bubbles are also A, which shows that the optical quality is excellent.

Finally, the aspects described above will be summarized.

According to one aspect, there is provided a method for producing a spectacle lens, the spectacle lens being a cured product obtained by curing a polymerizable composition containing 5-(isocyanatomethyl)bicyclo[2.2.1]hept-2-ene and one or more polythiol compounds, the method including: preparing the polymerizable composition by a preparation process including a first mixing step of mixing 5-(isocyanatomethyl)bicyclo[2.2.1]hept-2-ene and a polythiol compound with each other in the presence of a first catalyst that catalyzes a thiol-ene reaction, and a second mixing step of mixing a second catalyst that catalyzes a thiourethanization reaction with a mixture obtained in the first mixing step; and subjecting the polymerizable composition to a curing treatment.

According to the method for producing a spectacle lens, a polythiourethane-based spectacle lens having excellent optical quality can be provided using 5-(isocyanatomethyl)bicyclo[2.2.1]hept-2-ene.

In one aspect, the first mixing step can include heating the mixture including the 5-(isocyanatomethyl)bicyclo[2.2.1]hept-2-ene, the polythiol compound, and the first catalyst.

In one aspect, the second mixing step can include mixing a poly(thi)ol compound with the mixture obtained in the first mixing step in the presence of the second catalyst.

In one aspect, the second mixing step can include mixing a poly(thi)ol compound and an iso(thio)cyanate compound with the mixture obtained in the first mixing step in the presence of the second catalyst.

In one aspect, the first catalyst can be an azobis compound.

In one aspect, the second catalyst can be an organotin compound.

According to one aspect, a spectacle lens obtained by the production method is provided.

According to one aspect, spectacles including the spectacle lenses are provided.

The various aspects described in the present specification can be combined in two or more in any combination.

The embodiment disclosed here is exemplary in all respects, and it should be considered that the embodiment is not restrictive. The scope of the present invention is defined not by the above description but by claims, and intends to include all modifications within meaning and a scope equal to claims.

### Industrial Applicability

One aspect of the present invention is useful in the field of producing a spectacle lens.

## Claims

1. A method for producing a spectacle lens, the spectacle lens being a cured product obtained by curing a polymerizable composition containing 5-(isocyanatomethyl)bicyclo[2.2.1]hept-2-ene and one or more polythiol compounds, the method comprising:
preparing the polymerizable composition by a preparation process including:
a first mixing step of mixing 5-(isocyanatomethyl)bicyclo[2.2.1]hept-2-ene and a polythiol compound with each other in the presence of a first catalyst that catalyzes a thiol-ene reaction; and
a second mixing step of mixing a second catalyst that catalyzes a thiourethanization reaction with a mixture obtained in the first mixing step; and
subjecting the polymerizable composition to a curing treatment.

2. The method for producing a spectacle lens according to claim 1, wherein the first mixing step includes heating the mixture including the 5-(isocyanatomethyl)bicyclo[2.2.1]hept-2-ene, the polythiol compound, and the first catalyst.

3. The method for producing a spectacle lens according to claim 1 or 2, wherein the second mixing step includes mixing a poly(thi)ol compound with the mixture obtained in the first mixing step in the presence of the second catalyst.

4. The method for producing a spectacle lens according to any one of claims 1 to 3, wherein the second mixing step includes mixing a poly(thi)ol compound and an iso(thio)cyanate compound with the mixture obtained in the first mixing step in the presence of the second catalyst.

5. The method for producing a spectacle lens according to any one of claims 1 to 4, wherein the first catalyst is an azobis compound.

6. The method for producing a spectacle lens according to any one of claims 1 to 5, wherein the second catalyst is an organotin compound.

7. A spectacle lens obtained by the method for producing a spectacle lens according to any one of claims 1 to 6.

8. Spectacles comprising the spectacle lenses according to claim 7.
